# EUROPEAN PATENT SPECIFICATION

(11) **EP 1 760 819 B1**
(45) Date of publication and mention of the grant of the patent: **11.01.2012**
(21) Application number: 06119119.3
(22) Date of filing: 17.08.2006
(51) Int. Cl.: H01M 10/0562, H01M 10/0525, C03C 4/18, C03C 10/00, H01B 1/12

(54) **Lithium ion secondary battery and solid electrolyte therefor**
Lithiumionen-Sekundärbatterie und Festelektrolyt dafür
Batterie secondaire à ions de lithium et l' électrolyte solide pour cette batterie

(30) Priority: 31.08.2005 JP 2005251266
(43) Date of publication of application: 07.03.2007
(73) Proprietor: Ohara Inc., Sagamihara-shi Kanagawa (JP)
(72) Inventor: Inda, Yasushi, Kanagawa (JP)
(74) Representative: von Kreisler Selting Werner

(56) References cited:
- EP-A- 1 049 188
- EP-A- 1 372 208
- EP-A- 1 424 743
- US-A1- 2004 126 653
- US-B1- 6 315 881

## Description

This invention relates to a solid electrolyte suitable for use in, mainly, lithium ion secondary battery and a lithium ion secondary battery comprising this solid electrolyte.

In the past, an electrolyte in which a film having micro-pores called a separator was impregnated with a non-aqueous electrolytic solution was generally used in lithium ion secondary batteries. A lithium ion secondary battery (a polymer battery) employing a polymer electrolyte made of a polymer has recently attracted more attention than such electrolyte based on liquid.

This polymer battery uses an electrolyte made in the form of gel in which the polymer is impregnated with a liquid electrolytic solution. Since it holds a liquid electrolytic solution in the polymer, it has the advantages that there is little possibility of leakage of the liquid and, therefore, safety of the battery is improved and that it has more freedom in adopting the configuration of the battery.

Since lithium ion conductivity of such polymer electrolyte is lower than an electrolyte containing only an electrolytic solution, there has occurred a practice to reduce thickness of the polymer electrolyte. There, however, has arisen a problem in such polymer electrolyte whose thickness is reduced that, since its mechanical strength is reduced, the polymer electrolyte becomes easy to break during production of the battery resulting in short-circuiting between the positive electrode and the negative electrode.

It has, therefore, been proposed, as disclosed by Japanese Patent Laid-open No. 06-140052, to provide a solid electrolyte by adding an inorganic oxide such as alumina to the electrolyte and thereby increase its mechanical strength. As such inorganic oxide, inorganic oxides other than alumina such as silica and lithium aluminate have also been proposed.

However, the addition of such inorganic oxides such as alumina to a solid electrolyte causes the problem that lithium ion conductivity in the electrolyte is significantly reduced. Moreover, when charge and discharge are repeated in a lithium ion secondary battery comprising this solid electrolyte, the electrolyte reacts with such inorganic oxide resulting in deterioration in the charge-discharge cycle characteristic of the lithium ion secondary battery.

EP 1 372 208 A2 discloses a battery which comprises a solid electrolyte layer and a carbon fiber layer said battery using an electrolytic solution and a carbon fiber layer is provided for holding this electrolytic solution by utilizing the high liquid holding property of the carbon fiber.

US 2004/0126653 A1 discloses a battery using metal lithium in the negative electrode and discloses that metal lithium reacts with the solid electrolyte and, for preventing deterioration of the solid electrolyte, a protective layer is provided on the side of the negative electrode.

An all solid battery employing an inorganic solid electrolyte as an electrolyte of a lithium ion secondary battery has also been proposed. The all solid battery is superior in its safety because it does not use a combustive organic solvent such as an electrolytic solution and therefore there is no danger of leakage of liquid or combustion. In the all solid battery, however, all of its positive electrode, electrolyte and negative electrode are made of solid and, therefore, close contacts between each of these components is hard to realize and, as a result, interface resistance tends to increase. In this case, since migration resistance to lithium ion through the interfaces between the electrodes and the electrolyte is so large that it is difficult to achieve a battery having a high output.

It is an object of the present invention to solve the problems in realizing a solid electrolyte and a lithium ion secondary battery incorporating the solid electrolyte due to the low lithium ion conductivity and provide a solid electrolyte which has a high battery capacity and an excellent charge-discharge characteristic without using an electrolytic solution and thereby can - be used stably over a long period of time and is easy to manufacture and handle in industrial production.

It is another object of the present invention to provide a lithium ion secondary battery using this solid electrolyte.

Studies and experiments made the inventor of the present invention on various electrolytes which can be used for a lithium ion secondary battery have resulted in the finding, which has led to the present invention, that by forming a solid composite electrolyte in the form of a sheet with lithium ion conductive glass-ceramics powder of a specific composition together with an ion conductive organic polymer of a specific composition, a significantly higher lithium ion conductivity than conventional polymer electrolytes can be achieved. In a case where this solid electrolyte is used as an electrolyte of a lithium ion secondary battery, it has also been found that, by laminating a battery by changing type and characteristics of electrolytes on the positive and negative electrode sides, high output and capacity and improved charge and discharge cycle characteristics as compared with prior art solid electrolyte type batteries can be realized.

An electrolyte for achieving the above described objects of the invention have a laminate of at least three layers and the thickest layer of the laminate comprises lithium ion conductive crystalline.

In the invention according to claim 1, a solid electrolyte has a laminate of at least three layers, the thickest layer in the laminate comprising lithium ion conductive crystalline. The thickest layer of the laminated electrolyte comprises 50 mass % to 90 mass % of lithium ion conductive crystalline. An electrolyte layer which comprises no lithium ion conductive crystalline or comprises only a small amount of lithium ion conductive crystalline comprises lithium ion conductive crystalline in an amount of 0 to 30 mass %.

- In another aspect of the invention, thickness of the laminated electrolyte is 200 µm or below.

In another aspect of the invention, thickness of an electrolyte layer comprising lithium ion conductive crystalline is 150 µm or below.

In another aspect of the invention, thickness of an electrolyte layer which comprises no lithium ion conductive crystalline or comprises only a small amount of lithium ion conductive crystalline is 50 µm or below.

In another aspect of the invention, the lithium ion conductive crystalline has ion conductivity of 10⁻⁴Scm⁻¹ or over.

In another aspect of the invention, lithium ion conductive crystalline contained in the thickest layer of the laminate is powder having an average particle diameter of 20 µm or below.

In another aspect of the invention, the lithium ion conductive crystalline is Li_{1+x+y}(Al, Ga)_{X}(Ti, Ge)₂₋ₓSi_{y}P_{3-y}O₁₂ where 0≤x≤1, 0≤y≤1.

In another aspect of the invention, the thickest layer of the laminate comprises lithium ion conductive glass-ceramics.

In another aspect of the invention, the thickest layer of the laminate comprises lithium ion conductive glass-ceramics in an amount of 60 mass % or over.

- In another aspect of the invention, thickness of the laminated electrolyte is 200 µm or below.

In another aspect of the invention, thickness of the electrolyte layer comprising lithium ion conductive glass-ceramics is 150 µm or below.

In another aspect of the invention, thickness of an electrolyte layer which comprises no lithium ion conductive glass-ceramics or comprises only a small amount of lithium ion conductive glass-ceramics is 50 µm or below.

In another aspect of the invention, an electrolyte layer which comprises no lithium ion conductive glass-ceramics or comprises only a small amount of lithium ion conductive glass-ceramics comprises lithium ion conductive glass-ceramics in an amount of 30 mass % or below.

In another aspect of the invention, the lithium ion conductive glass-ceramics have ion conductivity of 10⁻⁴Scm⁻¹ or over.

In another aspect of the invention, lithium ion conductive glass-ceramics contained in the thickest layer of the laminate is powder having an average particle diameter of 20 µm or below.

In another aspect of the invention, ion conductivity of the laminated electrolyte is ion conductivity of 10⁻⁵Scm⁻¹ or over.

In another aspect of the invention, a predominant crystal phase of the lithium ion conductive glass-ceramics is Li_{1+x+y}(Al, Ga)ₓ(Ti, Ge)₂₋ₓSi_{y}P_{3-y}O₁₂ where 0≤x≤1, 0≤y≤1.

In another aspect of the invention, the lithium ion conductive glass-ceramics comprise in mol %

| | |
|---|---|
| Li₂O | 12-18% |
| Al₂O₃ + Ga₂O₃ | 5 - 10% |
| TiO₂ + GeO₂ | 35 - 45% |
| SiO₂ | 1 - 10% and |
| P₂O₅ | 30 - 40%. |

In another aspect of the invention, the thickest layer of the laminated electrolyte is free of pores or crystal grain boundary which obstructs conduction of ions.

In another aspect of the invention, there is provided a lithium ion secondary battery comprising the above described solid electrolyte.

In another aspect of the invention, there is provided a lithium ion secondary battery comprising, in a positive electrode and a negative electrode thereof, the same glass-ceramics and organic polymer as those contained in the solid electrolyte.

According to the present invention, a solid electrolyte can be provided which, without using an electrolytic solution, has high lithium ion conductivity and is easy for handling by itself. By using the laminated electrolyte, the between the electrolyte and the electrodes can be reduced whereby a lithium ion secondary battery having a high battery capacity and high output can be provided. As compared with the prior art lithium ion secondary batteries, the lithium ion secondary battery of the present invention does not contain an organic electrolytic solution and, therefore, has no likelihood of leakage of liquid or combustion whereby a safe battery can be provided. Further, since there is no likelihood of leakage of liquid or combustion, the lithium ion secondary battery of the present invention has an improved heat resisting temperature and can be used at a relatively high temperature.
FIG. 1 is a sectional view showing a lithium ion secondary battery as known from the background art, and
- FIG. 2 is a sectional view showing another example of a lithium ion secondary battery related to the present invention.

Description will now be made in detail about modes of embodiments of the present invention with reference to attached drawings below.

In case of being used as a battery, the laminated solid electrolyte of the present invention derives a battery with higher outputs as it gets thinner since migration distances of lithium ions are shorter and wide electrode area per unit volume can be secured to derive a battery with high capacity. Therefore, thickness of the laminated electrolyte for use as solid electrolyte is preferably 200 µm or below and more preferably 150 µm or below and most preferably 120 µm or below. The laminated electrolyte layer is configured to take shape of a lamination of a solid electrolyte layer containing a lot of lithium ion conductive crystalline and an electrolyte layer comprising no lithium ion conductive crystalline or comprising only a small amount of lithium ion conductive crystalline. An electrolyte made to contain a lot of lithium ion conductive crystalline has a high lithium ion conductivity as well as a high strength, but it is difficult to contact a positive electrode and a negative electrode that are solid, resulting in a large interface resistance. An electrolyte containing no lithium ion conductive crystalline or containing only a small amount of lithium ion conductive crystalline can contact well the solid positive electrode and negative electrode to make a good contact interface when they are treated by heating, pressing or the like. However, since the strength thereof is low, a thinner layer is more likely to give rise to short circuit between the electrodes and it is necessary to provide a sufficient thickness in case of a single layer.

Therefore, if an electrolyte layer having good contact interfaces with the electrodes is formed onto a solid electrolyte layer that contains a lot of lithium ion conductive crystalline, the contact interface with the positive or negative electrode will be good.

- Even if an electrode material is used which may react with a glass-ceramics on direct contact therewith, selective formation of a non-reactive electrolyte containing no lithium ion conductive crystalline onto an electrolyte containing the glass-ceramics, will make it possible to prevent reaction between the lithium ion conductive crystalline and the electrode and form a battery with no deterioration in performance.

Accordingly, the electrolyte of the present invention is configured by laminating at least three or more layers. In addition, it is possible to dispose a layer containing lithium ion conductive crystalline in the center to make three-layer configuration with an electrolyte layer containing no lithium ion conductive crystalline or containing only a small amount of lithium ion conductive crystalline disposed respectively on the positive electrode side and the negative electrode side so as to configure the layer on the positive electrode side and the layer on the negative electrode side to be respectively appropriate thereto.

The contact interface between an electrolyte layer containing no lithium ion conductive crystalline or containing only a small amount of lithium ion conductive crystalline and electrodes is good but lithium ion conductivity will become disadvantageous compared with a solid electrolyte layer containing a lot of lithium ion conductive crystalline. Accordingly, from the view point of lithium ion conductivity as well as strength as the laminated electrolyte in its entirety, the solid electrolyte layer containing a lot of lithium ion conductive crystalline is preferably the thickest layer and the electrolyte layer containing no lithium ion conductive crystalline or containing only a small amount thereof is advantageously thinner. Preferable thickness about respective electrolyte layer will be specifically described below.

The thickness of a solid electrolyte layer containing a lot of lithium ion conductive crystalline such as a lithium ion conductive glass-ceramics is preferably 150 µm or below, more preferably 100 µm or below and most preferably 50 µm or below since a battery with high output can be derived from a thinner such layer due to shorter migration distances of lithium ions.

In addition, thickness of an electrolyte layer containing no lithium ion conductive crystalline or containing only a small amount thereof such as lithium ion conductive glass-ceramics is preferably 50 µm or below, more preferably 30 µm or below and most preferably 10 µm or below since a battery with high output can be derived from a thinner one due to shorter migration distances of lithium ions and since ion conductivity is low compared with a solid electrolyte layer containing a lot of lithium ion conductive crystalline.

Mobility of lithium ions at the time of charge-discharge in a lithium secondary battery depends on lithium ion conductivity as well as lithium ion transport number of electrolyte and therefore matter with high lithium ion conductivity is preferably used for laminated solid electrolyte of the present invention.

Ion conductivity of lithium ion conductive crystalline is preferably 1 × 10⁻⁴ S·cm⁻¹ or more, more preferably 5 × 10⁻⁴ S·cm⁻¹ or more and most preferably 1 × 10⁻³ S·cm⁻¹ or more.

In forming an electrolyte containing lithium ion conductive crystalline with a high ion conductivity, a small amount of the crystalline would not provide any lithium ion conductivity for the solid electrolyte. On the other hand, too large an amount thereof will decrease the content of the organic polymer as a binder to weaken adherence between the crystalline and the organic polymer, deteriorate mobility of lithium ions between the crystalline and decrease the strength. Therefore, the lowest content of lithium ion conductive crystalline in the solid electrolyte of the present invention is preferably 50 mass %, more preferably 55 mass % and most preferably 60 mass %. In addition, the highest content thereof is preferably 95 mass %, more preferably 90 mass % and most preferably 80 mass %.

Here, as lithium ion conductive crystalline, crystalline having perovskite structures having lithium ion conductivity, such as LiN, LISICON group and La_{0.55}Li_{0.35}TiO₃; LiTi₂P₃O₁₂ having NASICON type structure; and glass-ceramics comprising those crystalline can be used. In particular, a glass-ceramics comprising the deposit of crystalline of NASICON type structure is free of pores or grain boundaries which impede ion conduction, and therefore is highly ion conductive, and excellent in chemical stability which make it more preferable.

In addition, aside from glass-ceramics, as material being free of pores or crystalline grain boundary which impedes ion conduction, single crystalline of the above described crystalline can be nominated but since it is difficult and costly to manufacture them, lithium ion conductive glass-ceramics are most preferably used.

Here, pores or crystalline grain boundary impeding ion conduction in the present invention refers to ion conductivity disturbing factors such as pores or crystalline grain boundary decreasing conductivity of entire inorganic matter containing lithium ion conductive crystalline to 10% or below against conductivity of lithium ion conductive crystalline itself in the inorganic matter.

In addition, the ion conductivity of the solid electrolyte layer containing a lot of lithium ion conductive crystalline such as lithium ion conductive glass-ceramics is preferably 1 × 10⁻⁵ S·cm⁻¹ or more, more preferably 5 × 10⁻⁵ S·cm⁻¹ or more and most preferably 1 × 10⁻⁴ S·cm⁻¹ or more.

The ion conductivity of laminated electrolyte is preferably 1 × 10⁻⁵ S·cm⁻¹ or more, more preferably 5 × 10⁻⁵ S·cm⁻¹ or more and most preferably 1 × 10⁻⁴ S·cm⁻¹ or more since higher ion conductivity of laminated electrolyte makes lithium ion conduction faster and derives high output battery.

On the other hand, as the lithium ion conductive crystalline or the glass-ceramics powder having a high ion conductivity to be contained in the solid electrolyte layer of the present invention, powder obtained by crushing the lithium ion conductive crystalline or glass-ceramics is used. Such lithium ion conductive crystalline or the glass-ceramics powder should be preferably dispersed uniformly in the solid electrolyte from the standpoints of ion conductivity of the solid electrolyte and mechanical strength. For enhancing dispersion of such powder and achieving a desired thickness of the solid electrolyte, average particle diameter of the lithium ion conductive crystalline or the glass-ceramics powder should be preferably 20 µm or below, more preferably be 15 µm or below and most preferably 10 µm or below.

The above described lithium ion conductive crystalline is Li_{1+x+y}(Al, Ga)ₓ(Ti, Ge)₂₋ₓSi_{y}P_{3-y}O₁₂ (0 ≤ x ≤ 1, 0 ≤ y ≤ 1). X and y are preferably 0 ≤ x ≤ 0.4, 0 < y ≤ 0.6 and most preferably 0.1 ≤ x ≤ 0.3, 0.1 < y ≤ 0.4. In addition, the above described lithium ion conductive glass-ceramics is made by heat treating a Li₂O-Al₂O₃-TiO₂-SiO₂-P₂O₅ mother glass for crystallization and has a predominant crystalline phase of Li_{1+x+y}(Al, Ga)ₓ(Ti, Ge)₂₋ₓSi_{y}P_{3-y}O₁₂ (0 ≤ x ≤ 1, 0 ≤ y ≤ 1). X and y should be preferably 0 ≤ x ≤ 0.4, 0 < y ≤ 0.6 and most preferably 0.1 ≤ x ≤ 0.3, 0.1 < y ≤ 0.4.

Composition ratios in mol % and effect thereof of respective components constituting the lithium ion conductive glass-ceramics will now be specifically described.

The Li₂O component is an indispensable component for providing a Li⁺ ion carrier and thereby a lithium ion conductivity. For achieving a good ion conductivity, the lowest content of this component should be preferably 12%, more preferably 13% and most preferably 14%. The highest content of this component should be preferably 18%, more preferably 17% and, most preferably 16%.

The Al₂O₃ component is effective for improving thermal stability of the mother glass and also for providing Al³⁺ ion as a solid solution in the above described crystalline phase and thereby improving lithium ion conductivity. For achieving these effects, the lowest content of this component should be preferably 5%, more preferably 5.5% and most preferably 6%. If, however, the content of this component exceeds 10%, thermal stability of the glass is deteriorated rather than improved and ion conductivity of the glass-ceramics is reduced. Therefore, the highest content of this component should be preferably 10%, more preferably 9.5% and most preferably 9%.

The TiO₂ component contributes to forming of the glass and also constitutes the above described crystalline phase. In both the glass and the above described crystalline, both forms of the component can be continuously replaced by each other. For vitrification, at least one of the forms must be present and, for the above described crystalline phase to deposit as a main phase from the glass and thereby improve ion conductivity, the lowest content of the component should be preferably 35%, more preferably 36% and most preferably 37%. The highest content of the component should be preferably 45%, more preferably 43% and most preferably 42%.

The SiO₂ component is effective to improve the melting property and thermal stability of the mother glass and also to provide Si⁴⁺ ions soluble in the above described crystalline phase and thereby improve the lithium ion conductivity. For achieving these effects sufficiently, the lowest content of this component should be preferably 1%, more preferably 2% and most preferably 3%. If, however, the content of this component exceeds 10%, ion conductivity of the glass-ceramics is reduced rather than improved. Therefore, the highest content of this component should be preferably 10%, more preferably 8% and most preferably 7%.

The P₂O₅ component is an indispensable component as a glass former and also constitutes the above described crystalline phase. If the content of this component is less than 30%, it is difficult to vitrify. Therefore, the lowest content of this component should be preferably 30%, more preferably 32% and most preferably 33%. If the content of this component exceeds 40%, the above described crystalline phase is difficult to deposit from the glass. Therefore, the highest content of this component should be preferably 40%, more preferably 39% and most preferably 38%.

In the above described composition, a glass can be easily obtained by casting molten glass and a glass-ceramics obtained by heat treating this glass and having the above described crystalline phase exhibits a high lithium ion conductivity.

Aside from the above described composition, in glass-ceramics having a crystal structure similar to the one described above, Al₂O₃ and TiO₂ can be replaced by Ga₂O₃ and GeO₂, respectively, partly or in whole. In the manufacture of the glass-ceramics, other materials may be added in small amounts for lowering the melting point or improving stability of the glass within a range not to deteriorate ion conductivity.

The composition of the glass-ceramics desirably contains alkaline metals other than Li₂O, such as Na₂O, K₂O and the like, as little as possible. These components present in the glass-ceramics will impede conduction of the lithium ions to a lower conductivity as a result of the mixing effect of alkaline ions.

Addition of sulfur to the glass-ceramics composition, slightly improves the lithium ion conductivity but lowers chemical durability and stability and therefore sulfur is desirably contained as little as possible.

The composition of the glass-ceramics desirably contains components such as Pb, As, Cd, Hg and the like as little as possible since they may harm the environment and human bodies.

The ion conductive organic polymer, a constituent of the solid electrolyte comprising the lithium ion conductive glass-ceramics of the present invention, should be preferably formed in the form of a flexible sheet when it is combined with the glass-ceramics from the standpoint that the capacity of the battery per volume can be increased when it is used in the battery and it can be formed in various shapes owing to its flexibility.

For imparting ion conductivity to the organic polymer, any suitable lithium salt is dissolved in the organic polymer for use. For this purpose, lithium salts which can dissolve in the organic polymer and dissociate lithium ions are preferably used. Such lithium salts include, for example, LiBF₄, LiCF₃SO₃, LiSO₃CH₃, LiN(SO₂CF₃)₂, LiN(SO₂C₂F₅)₂, LiC(SO₂CF₃)₃, organic ion type polysulfide, and Li[B(C₆H₄O₂)₂], Li[B(C₆H₃FO₂)₂].

If the organic polymer contained in the solid electrolyte is not ion conductive at all but an insulating material, its combination with a glass-ceramics having a high ion conductivity does not produce a solid electrolyte having a high ion conductivity. Therefore, the organic polymer needs to have ion conductivity, which should be preferably 1 × 10⁻⁸ S·cm⁻¹ or more and more preferably 1 × 10⁻⁶ S·cm⁻¹ or more and most preferably 1 × 10⁻⁵ S·cm⁻¹ or more.

For achieving the above described ion conductivity of the organic polymer, the organic polymer should be preferably either polyethylene oxide, or a copolymer, a crosslinked structure or a mixture of polyethylene oxide and another organic polymer. When the organic polymer alone is used, ion conductivity can be increased if its molecular weight is made small but, in this case, its strength is weak and the polymer becomes a gel with the result that it becomes difficult to handle it in a normal manner. Conversely, when its molecular weight is made large, its strength is improved but ion conductivity is deteriorated significantly. In contrast to such use of the organic polymer alone, the employment of a plurality of polymers enables control of properties including ion conductivity and strength by selecting the type, size and structure of the organic polymers to be contained whereby production of an organic polymer capable of being treated easily and having excellent ion conductivity can be realized. Polyethylene oxide is important in performing the function of providing the organic polymer contained mainly in the solid electrolyte with high ion conductivity. Another organic polymer described above mainly performs the function of providing the organic polymer with a high strength. Another such polymer should be preferably at least one selected from, for example, polypropylene oxide, polyolefins, fluorine resins such as poly(tetrafluoroethylene), poly(chlorotrifluoroethylene), polyvinylidene fluoride, polyamides, polyesters, polyacrylate, allyl glycidyl ether or polymethacrylate.

If the amount of a lithium ion conductive glass-ceramics having a highly ion conductivity is small when it is incorporated in the electrolyte, as described above, the high lithium ion conductivity of the glass-ceramics cannot be exhibited sufficiently by the solid electrolyte. Conversely, if the amount thereof is excessively large, the content of the organic polymer as a binder becomes smaller with the result that adhesion of the glass-ceramics to the organic polymer becomes weaker, the mobility of lithium ions between the glass-ceramics masses is lower and the strength of the solid electrolyte is also decreased. For this reason, the lowest content of the lithium ion conductive glass-ceramics in the solid electrolyte of the present invention should be preferably 60 mass %, more preferably 65 mass % and most preferably 70 mass %. The highest content thereof should be preferably 95 mass %, more preferably 90 mass % and most preferably 80 mass %.

In addition, an electrolyte layer comprising no lithium ion conductive glass-ceramics or comprising only a small amount of a lithium ion conductive glass-ceramics has a lower lithium ion conductivity than a solid electrolyte layer containing the above described glass-ceramics and therefore has to be made thinner.

For this electrolyte containing no glass-ceramics powder or comprising only a small amount of glass-ceramics powder, organic polymer to which lithium salt contained in the above described solid electrolyte layer is added can be used.

The content of lithium ion conductive crystalline or lithium ion conductive glass-ceramics in an electrolyte layer containing no lithium ion conductive crystalline or no lithium ion conductive glass-ceramics or containing only a small amount of such crystalline or glass-ceramics is desirably 30 mass % or below. The content of 30 mass % or more will harden the electrolyte to increase the strength, but its contact and adhesive strength to the other electrolyte and the other electrode will decrease, thereby making no good contact interface. It is 25% or below more preferably.

The present invention particularizes a configuration of lithium ion conductive crystalline or glass-ceramics, or organic polymers as described above, and thereby makes a solid electrolyte having good ion conductivity derivable.

As the active material used for a positive electrode material of the lithium ion secondary battery of the invention, a transition metal compound which can charge and discharge lithium ion may be used. For example, at least one transition metal oxide selected from the group consisting of manganese, cobalt, nickel, vanadium, niobium, molybdenum, and titanium may be used. Since most active materials scarcely have electronic conductivity and ion conductivity, an electron conduction additive and an ion conduction additive should be preferably used. Such electronic conduction additives include, for example, conductive carbon, graphite, carbon fiber, metal powder, metal fiber and electronic conductive polymer. Such ion conduction additives include, for example, a substance including an ion conductive glass-ceramics, and an ion conductive polymer. These electron and ion conduction additives should be preferably added in an amount within a range from 3 to 35 mass %, more preferably 4 to 30 mass % and, most preferably, 5 to 25 mass % to the positive electrode material.

As the active material used for a negative electrode material used in the lithium ion secondary battery of the invention, metal lithium, alloys such as a lithium-aluminum alloy and a lithium-indium alloy which can charge and discharge lithium ion, transition metal oxides such as titanium and vanadium, and carbon materials such as graphite may be preferable. In the case where the active material is poor in electronic conductivity, as an electronic conduction additive, for example, conductive carbon, graphite, carbon fiber, metal powder, metal fiber and electron conductive polymer should be preferably used. As an ion conduction additive, an ion conductive glass-ceramics and an ion conductive polymer should be preferably added. These electron and ion conduction additives should be preferably added in an amount ranging from 3 to 35 mass %, more preferably 4 to 30 mass % and, most preferably, 5 to 25 mass %, to the negative electrode material.

Ion conductive glass-ceramics and ion conductive polymers added to the positive electrode and the negative electrode should be preferably the same as glass-ceramics and organic polymers contained in the solid electrolyte. If they are the same, the ion moving mechanism in the polymer contained in the electrolyte and electrodes is standardized and therefore ions can move smoothly between electrolyte and electrodes so that a battery with higher output and higher capacity can be provided.

### [Examples]

Description will now be made about specific examples of the solid electrolyte comprising the lithium ion conductive glass-ceramics and the lithium ion conductive organic polymer, and the lithium ion secondary battery employing such solid electrolyte made according to the present invention. Description will also be made about comparative examples for explaining about advantages of the examples of the present invention of the solid electrolyte comprising the lithium ion conductive glass-ceramics and the lithium ion conductive organic polymer, and the lithium ion secondary battery employing such solid electrolyte made according to this example

### [Reference-Example 1]

### (Preparation of lithium ion conductive glass-ceramics)

Raw materials of H₃PO₄, Al(PO₃)₃, Li₂CO₃, SiO₂ and TiO₂ were weighed and mixed uniformly to make a composition of 35.0% P₂O₅, 7.5% Al₂O₃, 15.0% Li₂O, 38.0% TiO₂ and 4.5% SiO₂ expressed in mol % on oxide basis. The mixture was put in a platinum pot and was heated and melted in an electric furnace at 1500°C for three hours while the molten glass was stirred. Then, the molten glass was dropped into flowing water to produce flakes of glass. The glass was heated at 950°C for twelve hours for crystallization and the target glass-ceramics was thereby obtained. By powder X-ray diffraction, it was confirmed that the main crystalline phase was LI_{1+x+y}AlₓTi₂₋ₓSi_{y}P_{3-y}O₁₂ (0 ≤ x ≤ 0.4, O < Y ≤ 0.6). Flakes of the glass-ceramics produced were milled by a jet mill and a powder of the glass-ceramics having an average particle diameter of 5 µm and maximum particle diameter of 20 µm were obtained.

### (Preparation of solid electrolyte containing a lot of glass-ceramics)

The glass-ceramics powder thus obtained as described above and a copolymer of polyethylene oxide and polypropylene oxide loaded with LiTFSI as a lithium salt were mixed uniformly at a ratio of 75:25 in use of solvent in mixture of NMP (N-methyl 2 pyrrolidone) and THF (tetrahydrofuran) and the mixture was coated by a roll coater on a PET film which had been subjected to releasing treatment and dried and then further dried under reduced pressure at 120°C for removing the solvent by evaporation to derive a solid electrolyte sheet with thickness of 30 µm. Another PET film which had been subjected to releasing treatment was adhered to the solid electrolyte thus obtained. The composite electrolyte was then heated at 150°C and was pressed by a roll press to remove bubbles remaining in the solid electrolyte. Then, the PET films on both sides of the solid electrolyte were stripped off. The solid electrolyte sheet obtained had thickness of 25 µm. A specimen for measuring the lithium ion conductivity was prepared from this sheet by using cells of stainless steel as electrodes. Impedance of the specimen at a room temperature of 25°C was measured for calculating ion conductivity. As a result, ion conductivity was found to be 1.4 × 10⁻⁴ S·cm⁻¹.

### (Preparation of Laminated Electrolyte)

Setting the solid electrolyte containing a lot of glass-ceramics, that was prepared as described above, to the roll coater again, a solution prepared by dissolving a copolymer of polyethylene oxide and polypropylene oxide loaded with LiTFSI as lithium salt into THF (tetrahydrofuran) solvent was applied thereon and dried so that a laminated solid electrolyte in structure was obtained. The obtained laminated electrolyte had thickness of 28 µm and the layer containing no glass-ceramics had thickness of 3 µm.

The obtained laminated electrolyte was sandwiched by stainless cells and impedance under a room temperature of 25°C was measured to derive ion conductivity. As a result, ion conductivity was found to be 1.0 × 10⁻⁴ S.cm⁻¹. As a result, ion conductivity of the layer having no glass-ceramics was found to be 3 × 10⁻⁵ S·cm⁻¹.

### (Preparation of a positive electrode)

As an active material of the positive electrode, a commercially available lithium cobalt oxide LiCoO₂ (average particle diameter of 6 µm) was used. This active material of the positive electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet. This positive electrode had thickness of 40 µm.

### (Preparation of a negative electrode)

As a material of the negative electrode, a commercially available lithium foil with thickness of 100 µm was used.

### (Assembly of a battery)

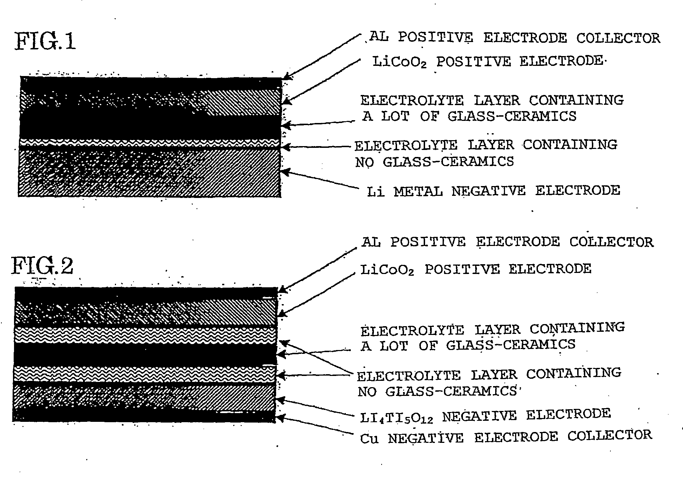

The above described positive electrode, the laminated electrolyte and the lithium foil were superposed with the faces containing no glass-ceramics being disposed at the lithium foil side, heated at 150°C and pressed by a roll press. Thereafter, they were struck out to derive Φ20 mm and sealed into a coin cell and assembled into a battery. The internal structure of this battery is shown in the section of FIG. 1.

A charge-discharge measurement was performed with respect to the assembled battery under conditions of a room temperature of 25°C, constant current of 0.5 mA/cm² and cut-off voltage of 4.2 V for charge and 3.0 V for discharge. Initial discharge capacity was 2 mAh. Thereafter, leaving them calmly at the temperature of 60°C for three days, a charge-discharge measurement was made again under the same conditions. The discharge capacity was 2.8 mAh then. Thereafter that cycle was repeated ten times. The resulting discharge capacity was 2.7 mAh and little deterioration in the capacity was found.

### [Comparative Example 1]

The same positive electrode and the same solid electrolyte comprising a lot of glass-ceramics as the embodiment were prepared and the positive electrode, the solid electrolyte and the lithium foil were laminated, heated at 150°C and adhered together by a roll press. Thereafter, they were struck out to derive Φ20 mm and sealed into a coin cell and assembled into a battery containing no laminated electrolyte. A charge-discharge measurement was performed under conditions of constant current of 0.5 mA/cm² and cut-off voltage of 4.2 V for charge and 3.0 V for discharge as in the Example 1. Initial discharge capacity was 1.1 mAh. Thereafter, leaving them calmly at the temperature of 60°C for three days, a charge-discharge measurement was performed but no current flowed to derive no battery capacity. Measurement of resistance between terminals of the coin battery was made. The resistance was 60000 Ω or more. Then the battery was disassembled to find the electrolyte to have undergone discoloration to black color and some reaction with lithium metal was observed.

### [Example 2]

### (Preparation of solid electrolyte containing a lot of glass-ceramics)

The glass-ceramics powder obtained in Reference-Example 1 and a copolymer of polyethylene oxide and polypropylene oxide loaded with LiBF₄ as a lithium salt were mixed uniformly at a ratio of 80:20 in use of solvent in mixture of NMP (N-methyl 2 pyrrolidone) and THF (tetrahydrofuran) and the mixture was coated by a roll coater on a PET film which had been subjected to releasing treatment and dried and then further dried under reduced pressure at 120°C for removing the solvent by evaporation to derive a solid electrolyte sheet with thickness of 30 µm. Another PET film which had been subjected to releasing treatment was adhered to the solid electrolyte thus obtained. The composite electrolyte was then heated at 150°C and was pressed by a roll press to remove bubbles remaining in the solid electrolyte. Then, the PET films on both sides of the solid electrolyte were stripped off. The solid electrolyte sheet obtained had thickness of 25 µm.

### (Preparation of a positive electrode and an electrolyte layer)

As an active material of the positive electrode, a commercially available lithium cobalt oxide LiCoO₂ (average particle diameter of 6 µm) was used. This active material of the positive electrode was mixed with a copolymer of polyethylene oxide and polypropylene oxide loaded with acetylene black, an electronic conduction additive and LiBF₄ as a lithium salt, an ion conduction additive, and a binder in use of an NMP solvent. This mixture was coated uniformly on an aluminum sheet having thickness of 12 µm which constituted a positive electrode collector and was dried at 120°C to produce a positive electrode in the form of a sheet.

A solution prepared by dissolving a copolymer of polyethylene oxide and polypropylene oxide loaded with LiBF₄ as lithium salt into THF (tetrahydrofuran) solvent was applied on this positive electrode and dried so that a positive electrode having an electrolyte layer containing no glass-ceramics was obtained.

The obtained positive electrode had thickness of 32 µm and the layer containing no glass-ceramics had thickness of 3 µm.

### (Preparation of a negative electrode and an electrolyte layer)

As an active material of the negative electrode, a commercially available lithium titanate Li₄Ti₅O₁₂ was used. This active material of the negative electrode was mixed with a copolymer of polyethylene oxide and polypropylene oxide loaded with acetylene black, an electronic conduction additive and LiBF₄ as a lithium salt, an ion conduction additive and a binder in use of an NMP solvent. This mixture was coated uniformly on a copper sheet having thickness of 18 µm which constituted a negative electrode collector and was dried at 120°C to produce a negative electrode in the form of a sheet.

A solution prepared by dissolving a copolymer of polyethylene oxide and polypropylene oxide loaded with LiBF₄ as lithium salt into THF (tetrahydrofuran) solvent was applied on this negative electrode and dried so that a negative electrode having an electrolyte layer containing no glass-ceramics was obtained. The obtained negative electrode had thickness of 30 µm and the layer containing no glass-ceramics had thickness of 3 µm.

### (Assembly of a battery)

The positive electrode having an electrolyte layer containing no glass-ceramics for one side of the above prepared solid electrolyte and the negative electrode having an electrolyte layer containing no glass-ceramics for the other side were brought into fitting with their electrolyte surfaces, heated at 100°C and pressed by a roll press. Thereafter, they were struck out to derive Φ20 mm and sealed into a coin cell and assembled into a battery. The internal structure of this battery is shown in the section of FIG. 2.

A charge-discharge measurement performed with respect to the assembled battery under conditions of a room temperature of 25°C, constant current of 0.5 mA/cm² and cut-off voltage of 3.5 V for charge and 2.0 V for discharge. Initial discharge capacity was 1.5 mAh. Thereafter that cycle was repeated ten times. The resulting discharge capacity was 1.4 mAh and the capacity of 90% or more was retained compared with the initial capacity.

### [Comparative Example 2]

### (Preparation of a positive electrode)

As an active material of the positive electrode, a commercially available lithium cobalt oxide LiCoO₂ (average particle diameter of 6 µm) was used. This active material of the positive electrode was mixed with a copolymer of polyethylene oxide and polypropylene oxide loaded with acetylene black, an electronic conduction additive and LiBF₄ as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet. The obtained positive electrode had thickness of 32 µm.

### (Preparation of a negative electrode)

As an active material of the negative electrode, a commercially available lithium titanate Li₄Ti₅O₁₂ was used. This active material of the negative electrode was mixed with a copolymer of polyethylene oxide and polypropylene oxide loaded with acetylene black, an electronic conduction additive and LiBF₄ as a lithium salt, an ion conduction additive and a binder in use of an NMP solvent. This mixture was coated uniformly on a copper sheet having thickness of 18 µm which constituted a negative electrode collector and was dried at 120°C to produce a negative electrode in the form of a sheet. The obtained negative electrode had thickness of 30 µm.

### (Assembly of a battery)

The above prepared positive electrode for one side of the solid electrolyte prepared in Example 2 and the negative electrode for the other side were brought into fitting, heated at 100°C and pressed by a roll press. Thereafter, they were struck out to derive Φ20 mm and sealed into a coin cell and assembled into a battery with no electrolyte having been laminated thereon.

Likewise in Example 2, a charge-discharge measurement was performed with respect to the assembled battery under conditions of a room temperature of 25°C, constant current of 0.5 mA/cm² and cut-off voltage of 3.5 V for charge and 2.0 V for discharge. Initial discharge capacity was 1.1 mAh. Thereafter the cycle was repeated ten times. The battery had then a discharge capacity of 0.9 mAh, showing retention of 90% or more of the initial capacity but a lower capacity than the battery comprising the laminated electrolyte of Example 2.

### [Example 3]

### (Preparation of solid electrolyte)

Raw materials of H₃PO₄, Al(PO₃)₃, Li₂CO₃, SiO₂, TiO₂ and GeO₂ were weighed and mixed uniformly to make a composition of 37.0% P₂O₅, 8% Al₂O₃, 15.0% Li₂O, 20.0% TiO₂, 4% SiO₂ and 16% GeO₂ expressed in mol % on oxide basis. The mixture was put in a platinum pot and was heated and melted in an electric furnace at 1400°C for three hours while the molten glass was stirred. The molten glass was cast into a stainless mold to prepare a glass plate. This glass was heated in an electric furnace at 900°C and the target glass-ceramics plate was thereby obtained. By powder X-ray diffraction, it was confirmed that the main crystalline phase was Li_{1+x+y}AlₓTi₂-ₓSi_{y}P_{3-y}O₁₂ (0 ≤ x ≤ 0.4, O < y ≤ 0.6) in which a part of Ti was replaced with Ge.

This glass-ceramics was cut out into Φ20 mm and the both surfaces thereof were polished to derive disk type glass-ceramics (solid electrolyte) with thickness of 120 µm.

### (Preparation of a positive electrode and an electrolyte layer)

As an active material of the positive electrode, a commercially available lithium cobalt oxide LiCoO₂ (average particle diameter of 6 µm) was used. This active material of the positive electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet.

A solution prepared by dissolving a copolymer of polyethylene oxide and polypropylene oxide loaded with LITFSI as lithium salt into THF (tetrahydrofuran) solvent was applied on this positive electrode, dried and cut out into a disk of Φ20 mm so that a positive electrode having an electrolyte layer containing no glass-ceramics was obtained. The obtained positive electrode had thickness of 28 µm and the layer containing no glass-ceramics had thickness of 2 µm.

### (Preparation of a negative electrode and a laminated electrolyte layer)

A solution prepared by dissolving a copolymer of polyethylene oxide and polypropylene oxide loaded with LiTFSI as lithium salt into THF (tetrahydrofuran) solvent was applied on one surface of the solid electrolyte made of glass-ceramics obtained as above by spin coating to form an electrolyte layer containing no glass-ceramics having thickness of 0.5 µm and lithium metal with thickness of 0.1 mm cut out into Φ20 mm was adhered thereon.

### (Assembly of a battery)

The above-prepared positive having an electrolyte containing no glass-ceramics thereon and the laminated electrolyte attached to a negative electrode were adhered together on the surfaces of the electrolytes, sealed into a coin cell and left calmly at a temperature of 100°C for a day to prepare a coin battery with electrolyte portions having been adhered together. A charge-discharge measurement was performed with respect to the assembled battery under conditions of a temperature of 60°C, constant current of 0.2 mA/cm² and cut-off voltage of 4.2 V for charge and 3.0 V for discharge. Initial discharge capacity was 2.5 mAh. Thereafter that cycle was repeated ten times. The resulting discharge capacity was 2.4 mAh and the capacity of 95% was retained compared with the initial capacity.

### [Comparative Example 3]

### (Preparation of a positive electrode)

As an active material of the positive electrode, a commercially available lithium cobalt oxide LiCoO₂ (average particle diameter of 6 µm) was used. This active material of the positive electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet. Subject to cutting out into a disk form with Φ20 mm, the obtained positive electrode had thickness of 28 µm.

### (Assembly of a battery)

The above-prepared positive electrode, the solid electrolyte prepared in Example 3 and the lithium metal negative electrode were adhered together and sealed into a coin cell to prepare a coin battery. A charge-discharge measurement was performed under conditions of a temperature of 60°C, constant current of 0.2 mA/cm² and cut-off voltage of 4.2 V for charge and 3.0 V for discharge. Initial discharge capacity was only 0.2 mAh and the capacity measurement was almost impossible at the second charge-discharge measurement. The coin battery was disassembled to find the interface between the solid electrolyte and the lithium metal to have undergone discoloration to blue color and a certain reaction is deemed to have occurred.

### [Example 4]

### (Preparation of a solid electrolyte)

The same glass-ceramics powder as in Reference-Example 1 was mixed with 5% by weight of lithium phosphate Li₃PO₄, and the mixture was milled, and mixed by a ball mill. The resultant mixture was molded into a pellet form with Φ30 mm and sintered in an electric furnace at 1000°C. The pellet was processed to have Φ20 mm and thickness of 0.1 mm to prepare a solid electrolyte containing glass-ceramics.

### (Preparation of a positive electrode and an electrolyte layer)

As an active material of the positive electrode, a commercially available lithium manganate LiMn₂O₄ (average particle diameter of 5 µm) was used. This active material of the positive electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet.

A solution prepared by dissolving a copolymer of polyethylene oxide and polypropylene oxide loaded with LiTFSI as lithium salt into THF (tetrahydrofuran) solvent was applied on this positive electrode, dried and cut out into a disk of Φ20 mm so that a positive electrode having an electrolyte layer containing no glass-ceramics was obtained. The obtained positive electrode had thickness of 30 µm and the layer containing no glass-ceramics had thickness of 3 µm.

### (Preparation of a negative electrode and an electrolyte layer)

As an active material of the negative electrode, a commercially available lithium titanate Li₄Ti₅O₁₂ was used. This active material of the negative electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on a copper sheet having thickness of 18 µm which constituted a negative electrode collector and was dried at 120°C to produce a negative electrode in the form of a sheet.

A solution prepared by dissolving a copolymer of polyethylene oxide and polypropylene oxide loaded with LiTFSI as lithium salt into THF (tetrahydrofuran) solvent was applied on this negative electrode, dried and cut out into a disk of Φ20 mm so that a negative electrode having an electrolyte layer containing no glass-ceramics was obtained. The obtained negative electrode had thickness of 35 µm and the layer containing no glass-ceramics had thickness of 3 µm.

### (Assembly of a battery)

The positive electrode having an electrolyte layer containing no glass-ceramics for one side of the above prepared solid electrolyte and the negative electrode having an electrolyte layer containing no glass-ceramics for the other side were brought into fitting with their electrolyte surfaces, heated at 100°C, pressed by a single shaft hand-operated press, sealed into a coin cell and assembled into a battery.

A charge-discharge measurement was performed with respect to the assembled battery under conditions of a temperature of 60°C, constant current of 0.2 mA/cm² and cut-off voltage of 3.5 V for charge and 2.0 V for discharge. Initial discharge capacity was 1.4 mAh. Thereafter the cycle was repeated ten times. The resulting discharge capacity was 1.2 mAh and the capacity of 90% or more was retained compared with the initial capacity.

### [Comparative Example 4]

### (Preparation of a positive electrode)

As an active material of the positive electrode, a commercially available lithium manganese oxide LiMn₂O₄ (average particle diameter of 5 µm) was used. This active material of the positive electrode was mixed with a copolymer of polyethylene oxide and polypropylene oxide loaded with acetylene black, an electron conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet. Subject to cutting out into a disk shape with Φ20 mm, the positive electrode was obtained. The obtained positive electrode had thickness of 30 µm.

### (Preparation of a negative electrode)

As an active material of the negative electrode, a commercially available lithium titanate Li₄Ti₅O₁₂ was used. This active material of the negative electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on a copper sheet having thickness of 18 µm which constituted a negative electrode collector and was dried at 120°C to produce a negative electrode in the form of a sheet. Subject to cutting out into a disk shape with Φ20 mm, the negative electrode was obtained. The obtained positive electrode had thickness of 35 µm.

### (Assembly of a battery)

The above prepared positive electrode for one side of the solid electrolyte prepared in Example 4 and the negative electrode for the other side were brought into fitting, heated at 100°C, pressed by a single shaft hand-operated press, sealed into a coin cell and assembled into a battery.

A charge-discharge measurement was performed with respect to the assembled battery under conditions of a temperature of 60°C, constant current of 0.2 mA/cm² and cut-off voltage of 3.5 V for charge and 2.0 V for discharge. Initial discharge capacity was 0.5 mAh. Thereafter that cycle was repeated ten times. The battery had then a discharge capacity of 0.4 mAh, showing retention of 80% or more of the initial capacity but a lower capacity than the battery comprising the laminated electrolyte of Example 4.

### [Example 5]

### (Preparation of a positive electrode and an electrolyte layer)

As an active material of the positive electrode, lithium nickel-cobalt oxide LiNi₀.₈Co₀.₂O₂ (average particle diameter of 5 µm) was used. This active material of the positive electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet.

A solution prepared by dissolving a copolymer of polyethylene oxide and polypropylene oxide, loaded with LiTFSI as lithium salt into THF (tetrahydrofuran) solvent was applied on this positive electrode, dried and cut out into a disk of Φ20 mm so that a positive electrode having an electrolyte layer containing no glass-ceramics was obtained. The obtained positive electrode had thickness of 35 µm and the layer containing no glass-ceramics had thickness of 3 µm.

### (Preparation of a negative electrode and a laminated solid electrolyte)

The same solid electrolyte as in Example 3 was cut out into Φ20 mm and the both surfaces thereof were polished to derive a solid electrolyte made of glass-ceramics with thickness of 85 µm. A thin film electrolyte of Li₃PO_{3.8}N_{0.2} was mounted onto the solid electrolyte by RF-magnetron sputtering under a nitrogen atmosphere with Li₃PO₄ as target and the solid electrolyte as substrate. A solid electrolyte subject to lamination of a thin film electrolyte with thickness of 0.1 µm was prepared on one side of the solid electrolyte made of glass-ceramics. Lithium metal with thickness of 0.1 mm cut out into Φ20 mm being the negative electrode was adhered to this thin film electrolyte side.

### (Assembly of a battery)

The above-prepared positive electrode having an electrolyte layer containing no glass-ceramics and the laminated electrolyte attached to a negative electrode were adhered together on the surfaces of electrolyte, sealed into a coin cell and left calmly at a temperature of 100°C for a day to prepare a coin battery with electrolyte portions having been adhered together. A charge-discharge measurement was performed with respect to the assembled battery under conditions of a temperature of 60°C, constant current of 0.2 mA/cm² cut-off voltage of 4.2 V for charge and 3.0 V for discharge. Initial discharge capacity was 2.8 mAh. Thereafter that cycle was repeated ten times. The resulting discharge capacity was 2.7 mAh and the capacity of 95% was retained compared with the initial capacity.

### [Comparative Example 5]

### (Preparation of a positive electrode)

As an active material of the positive electrode, lithium nickel-cobalt oxide LiNi_{0.8}Co_{0.2}O₂ (average particle diameter of 5 µm) was used. This active material of the positive electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on an aluminum sheet having thickness of 12 µm which constituted a positive electrode collector and was dried at 120°C to produce a positive electrode in the form of a sheet. Subject to cutting out into a disk shape with Φ20 mm, the positive electrode was obtained. The obtained positive electrode had thickness of 35 µm.

### (Preparation of a solid electrolyte)

The same solid electrolyte as in Example 3 was cut out into Φ20 mm and the both surfaces thereof were polished to derive a solid electrolyte made of glass-ceramics with thickness of 85 µm.

### (Assembly of a battery)

The above-prepared positive electrode, the solid electrolyte and the lithium metal negative electrode were adhered together and sealed into a coin cell to prepare a coin battery. A charge-discharge measurement was performed under conditions of a temperature of 60°C, constant current of 0.2 mA/cm² and cut-off voltage of 4.2 V for charge and 3.0 V for discharge. Initial discharge capacity was only 0.4 mAh and the capacity measurement was almost impossible at the second charge-discharge measurement. The coin battery was disassembled to find the interface between the solid electrolyte made of glass-ceramics and the lithium metal to have undergone discoloration to blue color and a certain reaction is deemed to have occurred.

### [Example 6]

### (Preparation of solid electrolyte containing a lot of glass-ceramics)

The glass-ceramics powder thus obtained in Reference-Example 1 and a copolymer of polyethylene oxide and polypropylene oxide loaded with LiTFSI as a lithium salt were mixed uniformly at a ratio of 75:25 in use of solvent in mixture of NMP (N-methyl 2 pyrrolidone) and THF (tetrahydrofuran) and the mixture was coated by a roll coater on a PET film which had been subjected to releasing treatment and dried and then further dried under reduced pressure at 120°C for removing the solvent by evaporation to derive a solid electrolyte sheet with thickness of 30 µm. Another PET film which had been subjected to releasing treatment was adhered to the solid electrolyte sheet thus obtained. The composite electrolyte was then heated at 150°C and was pressed by a roll press to remove bubbles remaining in the solid electrolyte. Then, the PET films on both sides of the solid electrolyte were stripped off. The solid electrolyte sheet obtained had thickness of 25 µm.

### (Preparation of laminated electrolyte)

After setting the solid electrolyte containing a lot of glass-ceramics, prepared as described above, to the roll coater again, a solution prepared by dissolving a copolymer of polyethylene oxide and polypropylene oxide loaded with LiTFSI as lithium salt into THF (tetrahydrofuran) solvent was applied thereon and dried so that a laminated solid electrolyte in structure was obtained. The obtained laminated electrolyte had thickness of 28 µm and the layer containing no glass-ceramics had thickness of 3 µm.

### (Preparation of a lithium ion conductive glass-ceramics fine powder for addition to an electrode)

Glass-ceramics powder with average particle diameter of 5 µm and maximum particle diameter of 20 µm obtained in Reference-Example 1 underwent wet milling with NMP as a solvent in use of a circulation ball mill equipment to derive slurry fine powder with average particle diameter of 0.3 µm and maximum particle diameter of 0.5 µm.

### (Preparation of a positive electrode and an electrolyte layer)

As an active material of the positive electrode, a commercially available lithium cobalt oxide LiCoO₂ (average particle diameter of 6 µm) was used. This active material of the positive electrode was mixed with a copolymer of polyethylene oxide and polypropylene oxide loaded with acetylene black, an electronic conduction additive and LTFSI as a lithium salt, an ion conduction additive, and a binder and slurry containing glass-ceramics fine powder with average particle diameter of 0.3 µm and maximum particle diameter of 0.5 µm as prepared above in use of an NMP solvent. This mixture was coated uniformly on an aluminum sheet having thickness of 12 µm which constituted a positive electrode collector and was dried at 120°C to produce a positive electrode in the form of a sheet.

A solution prepared by dissolving a copolymer of polyethylene oxide and polypropylene oxide loaded with LiTFSI as lithium salt into THF (tetrahydrofuran) solvent was applied on this positive electrode and dried so

The obtained positive electrode had thickness of 32 µm and the layer containing no glass-ceramics had thickness of 3 µm.

### (Preparation of a negative electrode and an electrolyte layer)

As an active material of the negative electrode, a commercially available lithium titanate Li₄Ti₅O₁₂ was used. This active material of the negative electrode was mixed with a copolymer of polyethylene oxide and polypropylene oxide loaded with acetylene black, an electronic conduction additive and LiTFSI as a lithium salt, an ion conduction additive and a binder in use of an NMP solvent. This mixture was coated uniformly on a copper sheet having thickness of 18 µm which constituted a negative electrode collector and was dried at 120°C to produce a negative electrode in the form of a sheet.

A solution prepared by dissolving a copolymer of polyethylene oxide and polypropylene oxide loaded with LiTFSI as lithium salt into THF (tetrahydrofuran) solvent was applied on this negative electrode and dried so that a negative electrode having an electrolyte layer containing no glass-ceramics was obtained. The obtained negative electrode had thickness of 30 µm and the layer containing no glass-ceramics had thickness of 3 µm.

### (Assembly of a battery)

The positive electrode having an electrolyte layer containing no glass-ceramics for one face of the above prepared solid electrolyte and the negative electrode having an electrolyte layer containing no glass-ceramics for the other face were brought into fitting with their electrolyte surfaces, heated at 100°C and pressed by a roll press. Thereafter, they were struck out to derive Φ20 mm and sealed into a coin cell and assembled into a battery. The internal structure of this battery is the same as in FIG. 2.

A charge-discharge measurement was performed with respect to the assembled battery under conditions of a room temperature of 25°C, constant current of 0.5 mA/cm² and cut-off voltage of 3.5 V for charge and 2.0 V for discharge. Initial discharge capacity was 2.1 mAh. Thereafter that cycle was repeated ten times. The resulting discharge capacity was 2.0 mAh and the capacity of 95% or more was retained compared with the initial capacity.

As described above, using a laminated electrolyte, a solid lithium ion secondary battery with high capacity and good cycle characteristic was derived.

## Claims

1. A solid electrolyte having a laminate of at least three layers, **characterized in that** the thickest layer in the laminate is located in the middle of the laminate and comprises lithium ion conductive crystalline of 50 to 90 mass %, and each of the other at least two layers is located on the top and the bottom surface of the thickest layer in the laminate, respectively, and the other at least two layers comprise lithium ion conductive crystalline in an amount of 0 mass % to 30 mass %, respectively, and said solid electrolyte has no electrolytic solution.

2. A solid electrolyte as defined in claim 1, wherein the thickness of the laminated electrolyte is 200 µm or below.

3. A solid electrolyte as defined in any of claims 1-2 wherein the thickness of the thickest layer is 150 µm or below.

4. A solid electrolyte as defined in any of claims 1-3 wherein the thickness of the other two layers, respectively, is 50 µm or below.

5. A solid electrolyte as defined in any of claims 1-4 wherein the lithium ion conductive crystalline has ion conductivity of 10⁻⁴Scm⁻¹ or over.

6. A solid electrolyte as defined in any of claims 1-5 wherein the lithium ion conductive crystalline is Li_{1+x+y}(Al, Ga)ₓ(Ti, Ge)₂₋ₓSi_{y}P_{3-y}O₁₂ where 0≤x≤1, 0≤y≤1.

7. A solid electrolyte as defined in claim 1 wherein the thickest layer of the laminate comprises lithium ion conductive glass-ceramics.

8. A solid electrolyte as defined in claim 1 wherein the thickest layer of the laminate comprises lithium ion conductive glass-ceramics in an amount of 60 mass % or over.

9. A solid electrolyte as defined in claim 7 or 8 wherein the thickness of the laminated electrolyte is 200 µm or below.

10. A solid electrolyte as defined in any of claims 7-9 wherein the thickness of the thickest layer is 150 µm or below.

11. A solid electrolyte as defined in any of claims 7-10 wherein the thickness of the other two layers, respectively, is 50 µm or below.

12. A solid electrolyte as defined in any of claims 7-11 wherein the other two layers, respectively, comprises lithium ion conductive glass-ceramics in an amount of 0 mass % to 30 mass %.

13. A solid electrolyte as defined in any of claims 7 -12 wherein the lithium ion conductive glass-ceramics have ion conductivity of 10⁻⁴Scm⁻¹ or over.

14. A solid electrolyte as defined in any of claims 1-13 wherein the ion conductivity of the laminated electrolyte is 10⁻⁵Scm⁻¹ or over.

15. A solid electrolyte as defined in any of claims 7-14 wherein a predominant crystal phase of the lithium ion conductive glass-ceramics is Li_{1+x+y}(Al, Ga)ₓ(Ti, Ge)₂₋ₓSi_{y}P_{3-y}O₁₂ where 0≤x≤, 0≤y≤1.

16. A solid electrolyte as defined in any of claims 7-15 wherein the lithium ion conductive glass-ceramics comprise in mol % on oxide basis
| | |
|---|---|
| Li₂O | 12 - 18% |
| Al₂O₃ + Ga₂O₃ | 5 - 10% |
| TiO₂+ GeO₂ | 35 - 45% |
| SiO₂ | 1 - 10% and |
| P₂O₅ | 30 - 40%. |

17. A solid electrolyte as defined in any of claims 1-16 wherein the thickest layer of the laminated electrolyte comprises lithium ion conductive crystalline which is free of pores or crystal grain boundary which obstructs conduction of ions.

18. A lithium ion secondary battery comprising a solid electrolyte as defined in any of claims 1 - 17.

19. A lithium ion secondary battery as defined in claim 18 comprising, in a positive electrode and a negative electrode thereof, the same glass-ceramics and organic polymer as those contained in the solid electrolyte.

## Patentansprüche

1. Fester Elektrolyt, der ein Laminat aus wenigstens drei Schichten aufweist, **dadurch gekennzeichnet, dass** sich die dickste Schicht in dem Laminat in der Mitte des Laminats befindet und eine lithiumionenleitende kristalline Phase von 50 bis 90 Massen-% umfasst und sich die anderen wenigstens zwei Schichten jeweils an der oberen bzw. unteren Fläche der dicksten Schicht in dem Laminat befinden und die anderen wenigstens zwei Schichten eine lithiumionenleitende kristalline Phase in einer Menge von 0 Massen-% bis 30 Massen-% umfassen und der feste Elektrolyt keine Elektrolytlösung aufweist.

2. Fester Elektrolyt gemäß Anspruch 1, wobei die Dicke des laminierten Elektrolyten 200 µm oder weniger beträgt.

3. Fester Elektrolyt gemäß einem der Ansprüche 1 bis 2, wobei die Dicke der dicksten Schicht 150 µm oder weniger beträgt.

4. Fester Elektrolyt gemäß einem der Ansprüche 1 bis 3, wobei die Dicke der anderen zwei Schichten jeweils 50 µm oder weniger beträgt.

5. Fester Elektrolyt gemäß einem der Ansprüche 1 bis 4, wobei die lithiumionenleitende kristalline Phase eine Ionenleitfähigkeit von 10⁻⁴ S·cm⁻¹ oder mehr aufweist.

6. Fester Elektrolyt gemäß einem der Ansprüche 1 bis 5, wobei es sich bei der lithiumionenleitenden kristallinen Phase um Li_{1+x+y}(Al,Ga)ₓ(Ti,Ge)₂₋ₓSi_{y}-P_{3-Y}O₁₂ handelt, wobei 0≤x≤1,0≤y≤1.

7. Fester Elektrolyt gemäß Anspruch 1, wobei die dickste Schicht des Laminats eine lithiumionenleitende Glaskeramik umfasst.

8. Fester Elektrolyt gemäß Anspruch 1, wobei die dickste Schicht des Laminats eine lithiumionenleitende Glaskeramik in einer Menge von 60 Massen-% oder mehr umfasst.

9. Fester Elektrolyt gemäß Anspruch 7 oder 8, wobei die Dicke des laminierten Elektrolyten 200 µm oder weniger beträgt.

10. Fester Elektrolyt gemäß einem der Ansprüche 7 bis 9, wobei die Dicke der dicksten Schicht 150 µm oder weniger beträgt.

11. Fester Elektrolyt gemäß einem der Ansprüche 7 bis 10, wobei die Dicke der anderen zwei Schichten jeweils 50 µm oder weniger beträgt.

12. Fester Elektrolyt gemäß einem der Ansprüche 7 bis 11, wobei die anderen zwei Schichten jeweils eine lithiumionenieitende Glaskeramik in einer Menge von 0 Massen-% bis 30 Massen-% umfassen.

13. Fester Elektrolyt gemäß einem der Ansprüche 7 bis 12, wobei die lithiumionenleitende Glaskeramik eine Ionenleitfähigkeit von 10⁻⁴ S·cm⁻¹ oder mehr aufweist.

14. Fester Elektrolyt gemäß einem der Ansprüche 1 bis 13, wobei die Ionenleitfähigkeit des laminierten Elektrolyten 10⁻⁵ S·cm⁻¹ oder mehr beträgt.

15. Fester Elektrolyt gemäß einem der Ansprüche 7 bis 14, wobei eine vorherrschende Kristallphase der lithiumionenleitenden Glaskeramik Li_{1+x+y}(Al,Ga)ₓ(Ti,Ge)₂₋ₓSiy-P_{3-y}O₁₂ ist, wobei 0≤×≤1,0≤y≤1.

16. Fester Elektrolyt gemäß einem der Ansprüche 7 bis 15, wobei die lithiumionenleitende Glaskeramik Folgendes umfasst, in Mol-% auf Oxidbasis:
| | |
|---|---|
| Li₂O | 12-18% |
| Al₂O₃ + Ga₂O₃ | 5-10% |
| TiO₂ + GeO₂ | 35-45% |
| SiO₂ | 1-10% und |
| P₂O₅ | 30-40%. |

17. Fester Elektrolyt gemäß einem der Ansprüche 1 bis 16, wobei die dickste Schicht des laminierten Elektrolyten eine lithiumionenleitende kristalline Phase umfasst, die frei von Poren oder Kristallkorngrenzen, die die Ionenleitung behindern, ist.

18. Lithiumionen-Sekundärbatterie, die einen festen Elektrolyten gemäß einem der Ansprüche 1 bis 17 umfasst.

19. Lithiumionen-Sekundärbatterie gemäß Anspruch 18, die in einer positiven Elektrode und einer negativen Elektrode derselben dieselbe Glaskeramik und dasselbe organische Polymer umfasst, wie sie auch in dem festen Elektrolyten enthalten sind.

## Revendications

1. Electrolyte solide ayant un stratifié consistant en au moins trois couches, **caractérisé en ce que** la couche la plus épaisse dans le stratifié se trouve au milieu du stratifié et comprend une phase cristalline conductrice d'ions lithium dans une quantité de 50 à 90 % en masse, et les autres au moins deux couches se trouvent sur les surfaces supérieure et inférieure de la couche la plus épaisse dans le stratifié, et les autres au moins deux couches comprennent une phase cristalline conductrice d'ions lithium dans une quantité de 0 % en masse à 30 % en masse, et ledit électrolyte solide n'a pas de solution électrolytique.

2. Electrolyte solide selon la revendication 1, dans lequel l'épaisseur de l'électrolyte stratifié est 200 µm ou moins.

3. Electrolyte solide selon l'une quelconque des revendications 1 à 2, dans lequel l'épaisseur de la couche la plus épaisse est 150 µm ou moins.

4. Electrolyte solide selon l'une quelconque des revendications 1 à 3, dans lequel l'épaisseur des deux autres couches est 50 µm ou moins respectivement.

5. Electrolyte solide selon l'une quelconque des revendications 1 à 4, dans lequel la phase cristalline conductrice d'ions lithium a une conductivité ionique de 10⁻⁴ S·cm⁻¹ ou plus.

6. Electrolyte solide selon l'une quelconque des revendications 1 à 5, dans lequel la phase cristalline conductrice d'ions lithium est le Li_{1+x+y}(Al,Ga)ₓ(Ti,Ge)₂₋ₓSi_{y}P_{3-y}O₁₂, où 0 ≤ x ≤ 1, 0 ≤ y ≤ 1.

7. Electrolyte solide selon la revendication 1, dans lequel la couche la plus épaisse du stratifié comprend une vitro-céramique conductrice d'ions lithium.

8. Electrolyte solide selon la revendication 1, dans lequel la couche la plus épaisse du stratifié comprend une vitro-céramique conductrice d'ions lithium dans une quantité de 60 % en masse ou plus.

9. Electrolyte solide selon la revendication 7 ou 8, dans lequel l'épaisseur de l'électrolyte stratifié est 200 µm ou moins.

10. Electrolyte solide selon l'une quelconque des revendications 7 à 9, dans lequel l'épaisseur de la couche la plus épaisse est 150 µm ou moins.

11. Electrolyte solide selon l'une quelconque des revendications 7 à 10, dans lequel l'épaisseur des deux autres couches est 50 µm ou moins respectivement.

12. Electrolyte solide selon l'une quelconque des revendications 7 à 11, dans lequel les deux autres couches respectivement comprennent une vitro-céramique conductrice d'ions lithium dans une quantité de 0 % en masse à 30 % en masse.

13. Electrolyte solide selon l'une quelconque des revendications 7 à 12, dans lequel la vitro-céramique conductrice d'ions lithium a une conductivité ionique de 10⁻⁴ S·cm⁻¹ ou plus.

14. Electrolyte solide selon l'une quelconque des revendications 1 à 13, dans lequel la conductivité ionique de l'électrolyte stratifié est 10⁻⁵ S-cm⁻¹ ou plus.

15. Electrolyte solide selon l'une quelconque des revendications 7 à 14, dans lequel la phase cristalline principale de la vitro-céramique conductrice d'ions lithium est le Li_{i+x+y}(Al,Ga)ₓ(Ti,Ge)₂₋ₓSi_{y}P_{3-y}O₁₂, où 0 ≤ x≤ 1, 0 ≤ y ≤ 1.

16. Electrolyte solide selon l'une quelconque des revendications 7 à 15, dans lequel la vitro-céramique conductrice d'ions lithium comprend en pour cent molaires sur la base des oxydes :
| | |
|---|---|
| Li₂O | 12-18% |
| Al₂O₃ + Ga₂O₃ | 5-10% |
| TiO₂ + GeO₂ | 35-45% |
| SiO₂ | 1-10% et |
| P₂O₅ | 30-40%. |

17. Electrolyte solide selon l'une quelconque des revendications 1 à 16, dans lequel la couche la plus épaisse de l'électrolyte stratifié comprend une phase cristalline conductrice d'ions lithium qui est exempte de pores ou de joints de grains cristallins qui empêcheraient la conduction ionique.

18. Batterie secondaire à ions lithium comprenant un électrolyte solide tel que défini dans l'une quelconque des revendications 1 à 17.

19. Batterie secondaire à ions lithium selon la revendication 18 comprenant, dans une électrode positive et dans une électrode négative de la batterie, la même vitro-céramique et le même polymère organique que ceux contenus dans l'électrolyte solide.
